# EUROPEAN PATENT SPECIFICATION

(11) **EP 1 635 330 B1**
(45) Date of publication and mention of the grant of the patent: **28.11.2018**
(21) Application number: 05019913.2
(22) Date of filing: 13.09.2005
(51) Int. Cl.: G10L 19/00, H04M 1/60, H04M 1/725

(54) **Apparatus and method for transmitting background sound with voice signals in a phone**
Vorrichtung und Verfahren zur Übertragung von Hintergrundtöne mit Sprachsignalen in einem Telefon
Appareil et procédé de transmission de sons de fond avec signaux vocaux dans un téléphone

(30) Priority: 13.09.2004 JP 2004264876
(43) Date of publication of application: 15.03.2006
(73) Proprietor: Lenovo Innovations Limited (Hong Kong), Quarry Bay, Hong Kong (HK)
(72) Inventor: Komata, Nobuhiro, Minato-ku Tokyo (JP)
(74) Representative: Samson & Partner Patentanwälte mbB

(56) References cited:
- WO-A-01/75863
- WO-A-2004/068822
- US-A1- 2002 186 822
- PATENT ABSTRACTS OF JAPAN vol. 2003, no. 12, 5 December 2003 (2003-12-05) & JP 2004 179828 A (SANYO ELECTRIC CO LTD), 24 June 2004 (2004-06-24)

## Description

### BACKGROUND OF THE INVENTION

### FIELD OF THE INVENTION

The invention relates to a terminal which makes it possible for a user to listen to BGM while making communication with another terminal.

### DESCRIPTION OF THE RELATED ART

Presently available mobile and fixed telephones are designed to output predetermined sound through a speaker thereof, when it receives a call. A simplest method of outputting such sound includes converting PCM sound data stored in a ROM into analogue sound signals, and outputting the thus converted signals.

Another method, as in MIDI (Musical Instrumental Digital Interface), includes the steps of indicating timbre indicative of which instrument such as a piano or a guitar is used, pitch, length, intensity, velocity and speed, constructing sound data read out of a sound source, into melody, and outputting the thus constructed melody as music. Hereinbelow, such data as timbre, pitch, length, intensity, velocity and speed is called "music data".

As a sound source, there is known a sound source which synthesizes sound based on FM (Frequency Modulation) or AM (Amplitude Modulation). There is also known a PCM sound source. A PCM sound source is comprised of a memory such as ROM, a hard disc or a flush memory in which each of sampled timbres is stored. Reproduction of music through the use of a PCM sound source is carried out by reading timbre out of fundamental sound data, and making sound data in accordance with indicated pitch, length, intensity, velocity and speed for each of sound corresponding to each of notes defining a tune. Simply, sound which a listener can listen to as a tune is produced by indicating timbre, and processing the timbre in accordance with "music data" defining a pitch, a length, an intensity, a velocity, and a speed of sound.

A presently used mobile or fixed phone has a function of outputting a predetermined tune through a speaker thereof when it receives a call, and hence, has higher performance for informing a user of receiving a call than an old phone which outputs mechanically produced bell when it receives a call.

A presently used mobile or fixed phone rings or outputs a single tune when it receives a call, and, when a user pushes a "call" key, the phone ceases ringing or outputting a tune. Thereafter, a user can make communication with a caller.

Many attempts have been made to synthesize music and voices of a user.

Japanese Patent Application Publication No. 2001-60993 has suggested a phone in which music signals having been reproduced by a music reproducer are synthesized with received voices, and the music signals are synthesized to signals to be transmitted to a person with whom a user of the phone makes communication.

Japanese Patent Application Publication No. 2001-339487 has a phone in which music signals is generated in a sound source in accordance with music data, the thus generated music signals are mixed with voice signals, and the mixed signals are transmitted to a person with whom a user of the phone makes communication. Music signals as BGM may be mixed to voice signals of the user or the person.

Japanese Patent Application Publication No. 04-241548 has suggested a phone including a mixture circuit for mixing audio signals to voices of a user of the phone. While a user makes communication with another, the mixture circuit outputs signals to a telephone line.

Japanese Patent Application Publication No. 05-344234 has suggested a phone in which a tune is selected by a user among reproducible tunes. While a user makes communication with another, the selected tune is reproduced, and then, mixed with voice signals.

Japanese Patent Application Publication No. 11-112615 has suggested a phone including a mixer which mixes audio signals transmitted from a sound source, with voices of a person with whom a user of the phone makes communication with, transmitted from a communication controller. The thus mixed signals are transmitted from a speaker as synthesized audio signals.

The above-mentioned conventional phones are accompanied with a problem as follows.

In recent phones, when a user compresses a "call" key on receipt of a call, the phone ceases outputting sound. Accordingly, while a user of the phone makes communication, a user listens only to voices of himself/herself and a person with whom the user makes communication, and sounds in the surroundings such as sounds of a train or an automobile and other persons' voices. Such sounds are just noises to a user of the phone. In addition, it is impossible to present themes caused by elements other than conversation between a user of the phone and a person with whom the user makes communication.

US 2002/186822 A1 discloses to mix music generated by a first terminal with voice received from the second terminal during communication between the first and second terminals and/or to mix music generated by the first terminal with voice of a user of the first terminal to be transmitted to the second terminal during communication. Generation of music by the first terminal during communication with the second terminal is carried in accordance with control date indicative of the music's level. Selection of music to be mixed is carries by means of an input unit.

WO 2004/068822 A2 discloses a telephone communications apparatus for mixing a music signal with a speech signal to be transmitted and/or with a received signal. WO 2004/068822 A2 discloses to control whether or not music and speech signals are to be mixed. WO 2004/068822 A2 further discloses to vary the gain of the to be mixed music such that the music can be provided as background sound. It is also contemplated to match a data rate of the music to be mixed to a data rate used for voices. the music to be mixed with voice is obtained from a CD, a memory or a music server.

JP 2004 179828 discloses a telephone set being capable of mixing music with transmission voice of an operator of the telephone set and to reproduce this music as background music (BGM), i.e. to mix this music with voice of the telephone set's operator. Music to be mixed is selected in dependence of a party with which communication is carried out by means of the telephone set.

WO 01/75863 A1 discloses to mix, on a transmission side, voice information and background sound. Selection of a background sound to be mixed with voice information can be user-controlled and/or can be based on a current operational environment and/or condition.

### SUMMARY OF THE INVENTION

In view of the above-mentioned problems in the conventional phones, it is an object of the present invention to provide an apparatus for producing sound in an electronic device such as a phone, which is capable of presenting themes to conversation, and providing conversation environment not interfered with noises in the surroundings.

It is also an object of the present invention to provide a method of producing sound, a program for causing a computer to carry out the method, and an electronic device having a function of producing a sound.

To solve this object, the present invention provides solutions according to the independent claims. Preferred embodiments are defined in the dependent claims.

The advantages obtained by the aforementioned present invention will be described hereinbelow.

In accordance with the present invention, it is possible for a user of a phone such as a mobile phone to output background sound while the user is making communication with another. For instance, he/she can make conversation in such an environment as he/she makes conversation in a café or a restaurant. Thus, it is possible to present pleasant conversation environment which assists a user to have new themes, and keeps a user away from noises in the surroundings such as sounds of a train or a car, and others' voices.

### BRIEF DESCRIPTION OF THE DRAWINGS

FIG. 1 is a perspective view of a mobile phone in accordance with the first embodiment of the present invention.
FIG. 2 is a block diagram of the mobile phone illustrated in FIG. 1.
FIG. 3 illustrates data format used while a user listens to BGM.
FIG. 4 illustrates a database for assignment of tunes and so on.
FIG. 5 illustrates a tune database.
FIG. 6 is a flow chart showing steps to be carried out in the mobile phone when sound is synthesized.
FIG. 7 is a flow chart showing steps to be carried out in the individual assign routine.
FIG. 8 is a flow chart showing steps to be carried out in the mode-setting routine.
FIG. 9 is a flow chart showing steps to be carried out for selecting either a routine of the mobile phone or a routine of a mobile phone with which the mobile phone of a user makes communication.
FIG. 10 is a flow chart showing steps to be carried out for producing BGM in accordance with a routine of the mobile phone of a user.
FIG. 11 is a flow chart showing steps to be carried out for producing BGM in accordance with a routine of a mobile phone with which the mobile phone of a user makes communication.
FIG. 12 is a flow chart showing steps to be carried out in accordance with a selected setting-mode.
FIG. 13 is a perspective view of a mobile phone in accordance with the second embodiment of the present invention.
FIG. 14 is a block diagram of the mobile phone illustrated in FIG. 13.
FIG. 15 is a block diagram of the mobile phone in accordance with the ninth embodiment of the present invention.
FIG. 16 is a flow chart showing steps to be carried out for producing BGM in the mobile phone in accordance with the ninth embodiment of the present invention.
FIG. 17 is a block diagram of the mobile phone in accordance with the tenth embodiment of the present invention.

### DESCRIPTION OF THE PREFERRED EMBODIMENTS

In accordance with the embodiments of the present invention, it is possible for a user to listen to BGM while he/she makes communication with another through a mobile phone, a fixed phone, or a television telephone, for instance. Specifically, phones of a user and a person with whom the user makes communication are designed to store audio data therein, and the audio data is output together with voices of the user or the person in accordance with control carried out by one of the phones. Phones of a user and a person with whom the user makes communication may be designed to have a FM sound source, and sound is produced in accordance with music data transmitted from one of the phones, and then, the thus produced sound is output together with voices of the user or the person. As an alternative, sound signals may be produced in accordance with audio data or music data transmitted from the person, and the thus produced sound is output together with voices of the person through a speaker of the phone of the user.

Preferred embodiments in accordance with the present invention will be explained hereinbelow with reference to drawings.

### [First Embodiment]

In the first embodiment, background sound, for instance, natural sounds such as birds or waves, or music is output while a user of a phone is making communication with another. Thus, it is possible to present a user an environment in which he/she can make conversation in a cafe, listening to background sound. Background sound can be changed for each of persons with whom a user of the phone makes communication. For instance, if a tune X is assigned to Mr. A, a user can listen to the tune X as background sound, while making communication with Mr. A. Hereinbelow, natural sounds and music are referred to simply as "tune" or "BGM" for simplification of the description.

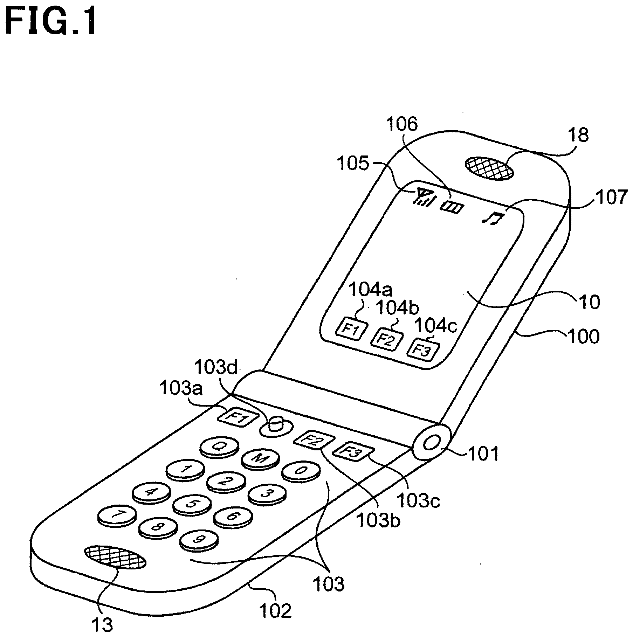

FIG. 1 is a perspective view of a mobile phone in accordance with the first embodiment of the present invention.

The mobile phone includes an upper housing 100, and a lower housing 102. The upper and lower housings 100 and 102 are mechanically and electrically connected to each other through a hinge 101 such that they can internally and externally rotate with each other around the hinge 101.

While a user makes communication with another, the upper and lower housings 100 and 102 are backwardly open to each other relative to a plane of FIG. 1, as illustrated in FIG. 1, and thus, a user can make communication through the mobile phone. When the upper and lower housings 100 and 102 are closed to each other, they are forwardly rotated to each other.

On an inner surface of the upper housing 100 are arranged a speaker 18 through which a user can listen to voices of a person with whom a user makes communication, and a first display 10 for displaying various information thereon. The first display 10 is comprised of a liquid crystal display (LCD) or an organic electroluminescence (EL), for instance. A second display (not illustrated) is arranged on an outer surface of the upper housing 100. The second display is comprised of a liquid crystal display (LCD) or an organic electroluminescence (EL), for instance.

On an inner surface of the lower housing 102 are arranged keys 103 including a F1 key 103a, a F2 key 103b, a F3 key 103c and a cursor key 103d.

The F1 key 103a, the F2 key 103b, and the F3 key 103c correspond to functional icons "F1" 104a, "F2" 104b and "F3" 104c, respectively. Functions applied to the functional icons "F1" 104a, "F2" 104b and "F3" 104c are dependent on a mode in which the mobile phone is. By actuating the F1 key 103a, the F2 key 103b, and the F3 key 103c, the applied function is carried out.

It is assumed that the F1 key 103a acts as a "cancellation" key for canceling a process now being executed, and returning back to the previous process, the F2 key 103b acts as a "termination" key for terminating a process now being executed, and the F3 key 103c acts as a "finalization" key for finalizing a selected process or menu. Though the explanation about the F1 key 103a and steps associated to the F1 key 103a are omitted in the flow charts mentioned hereinbelow, it is assumed that if the F1 key 103a is compressed, the present process is always cancelled, and the mobile phone returns back to the previous process.

On the first display 10 are displayed an icon 105 for displaying an intensity of an electric field, an icon 106 for displaying residual power of a battery, and an icon 107 for annunciating a user that a BGM mode is now selected.

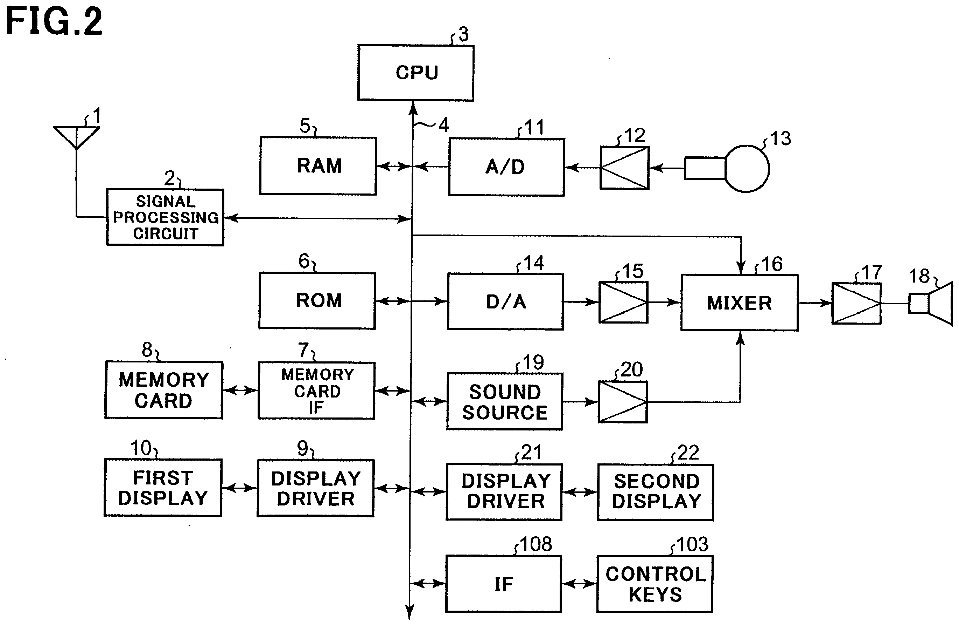

FIG. 2 is a block diagram of the mobile phone illustrated in FIG. 1. A battery and a power source circuit are omitted. Parts or elements that correspond to those of the mobile phone illustrated in FIG. 1 have been provided with the same reference numerals, and are not explained.

As illustrated in FIG. 2, the mobile phone includes an antenna 1, a signal processing circuit 2, a central processing unit (CPU) 3, buses 4, a random access memory (RAM) 5, a read only memory (ROM) 6, a memory card interface 7, a memory card 8, a display driver 9, a first display 10 (illustrated also in FIG. 1), an A/D converter 11, an amplifier 12, an microphone 13 (illustrated also in FIG. 1), a D/A converter 14, an amplifier 15, a mixer 16, an amplifier 17, a speaker 18 (illustrated also in FIG. 1), a sound source 19, an amplifier 20, a display driver 21, a second display 22, an interface 108, and control keys 103 (illustrated also in FIG. 1).

The central processing unit 3 is electrically connected to the random access memory (RAM) 5, the read only memory (ROM) 6, and later-mentioned circuits and devices through the buses 4 comprised of data, address and control buses.

The read only memory (ROM) 6 stores therein a program for controlling an operation of the mobile phone. The random access memory (RAM) 5 stores therein various data and parameters. The central processing unit 3 reads the program out of the read only memory (ROM) 6, and executes the program. Thus, the central processing unit 3 operates in accordance with the program stored in the read only memory (ROM) 6.

The signal processing circuit 2, when a signal is to be transmitted, outputs encoded and/or modulated digital sound data or packet data through the antenna 1, and, when a signal is received, demodulated and decoded received signals to obtain digital sound data or packet data.

The memory card interface 7 has a structure into which the memory card 8 can be inserted or out of which the memory card 8 can be pulled. The memory card 8 such as a flush memory or the read only memory 6 stores music data including timbre, pitch, length, intensity and velocity, speed data, format sound or tune data such as AAC, MP3, PCM and ADPCM, mixing data indicating balance between a volume of BGM and a volume of voices of a user of the mobile phone or a person with whom the user makes communication through the mobile phone, a later-mentioned database storing assignment of tunes, and a tune database therein. For simplification, it is assumed hereinbelow that the memory card 8 stores therein the above-mentioned data.

The first display 10 displays thereon data transmitted through the display driver 9, in the form of images.

The microphone 13 collects of voices of a user of the mobile phone, converts the voices into analog sound signals, and transmits the analog sound signals to the buses 4 through the amplifier 12 and the A/D converter 11.

The mixer 16 mixes signals of received voices transmitted from the signal processing circuit 2 through the D/A converter 14 and the amplifier 15, with sound signals transmitted from the sound source 19 through the amplifier 20, in accordance with control signals transmitted from the central processing unit 3 through the buses 4. The signals are mixed at such a rate that a volume of voices of a person with whom a user of the mobile phone makes communication is greater than a volume of BGM. The rate is determined such that BGM is not a bar to the conversation. For instance, the rate is determined such that a volume of BGM is equal to a volume of BGM which a user listens to during conversation in a café without a purpose of listening to music. The rate may be variable by a user.

The sound source 19 comprised an AM sound source, a FM sound source or a PCM sound source, and produces sound in accordance with music data and a control signal transmitted from the central processing unit 3.

The sound source 19 ceases outputting BGM sound when a line is interrupted, or on receipt of a control signal transmitted from the central processing unit 3 when a BGM mode is cancelled while communication is being made. When a BGM mode is valid, the sound source 19 produces and outputs BGM in accordance with music data and speed data having been transmitted from the central processing unit 3 and stored in a buffer (not illustrated). On receipt of new music data and speed data from the central processing unit 3, the sound source 19 newly produces and outputs BGM in accordance with the music data and speed data.

The speaker 18 outputs as a voice mixed signals transmitted from the mixer 16 through the amplifier 17.

The second display 22 displays thereon data transmitted the display driver 21, in the form of images.

Signals indicative of how the control keys 103 are operated are transmitted the central processing unit 3 through the interface 108 and the bus 4. The central processing unit 3 controls an operation of the mobile phone in accordance with the program stored in the read only memory 6 and the signals transmitted from the control keys 103.

The mixer 16 and the sound source 19 may be comprised of software. As of February 18, 2003, a software sound source is commercially available from YAMAHA (Japan), and a software mixer is commercially available from Imagic (Germany).

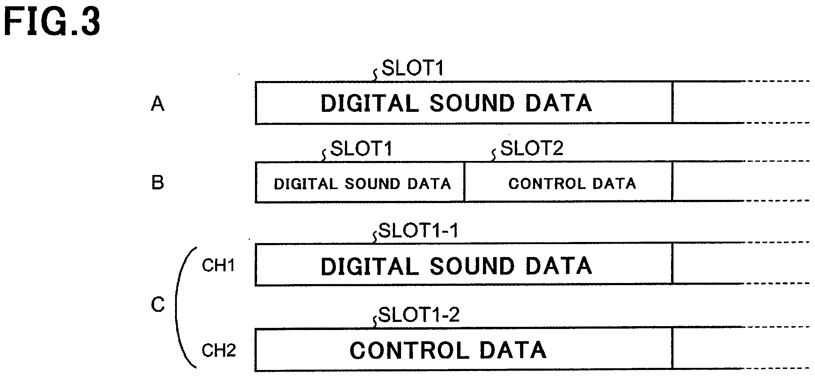

FIG. 3 illustrates data format used when BGM sound is output.

In FIG. 3, there are shown three formats used for listening to BGM during communication.

The format A is used when the sound source 19 is not used, that is, when the mobile phone of a user receives digital sound data produced by mixing BGM and voices of a person with whom a user of the mobile phone makes communication, in a mobile phone of the person.

The format B is used when control data comprised of a tune ID and the music data, and digital sound data comprised of voices of a person with whom a user of the mobile phone makes communication are transmitted in each of slots.

The formats A and B are used in wireless communication in a relatively narrow band such as GSM or PDC.

The format C is used in wireless communication in a broad band. Sound data comprised of voices of a person with whom a user of the mobile phone makes communication is transmitted through a slot SLOT1-1 in a channel CH1, and control data comprised of a tune ID and music data is transmitted through a slot SLOT1-2 in a channel CH2. The format C can be used in wireless communication in a broad band, such as so-called 3G or 4G.

It is assumed hereinbelow that the format B is used.

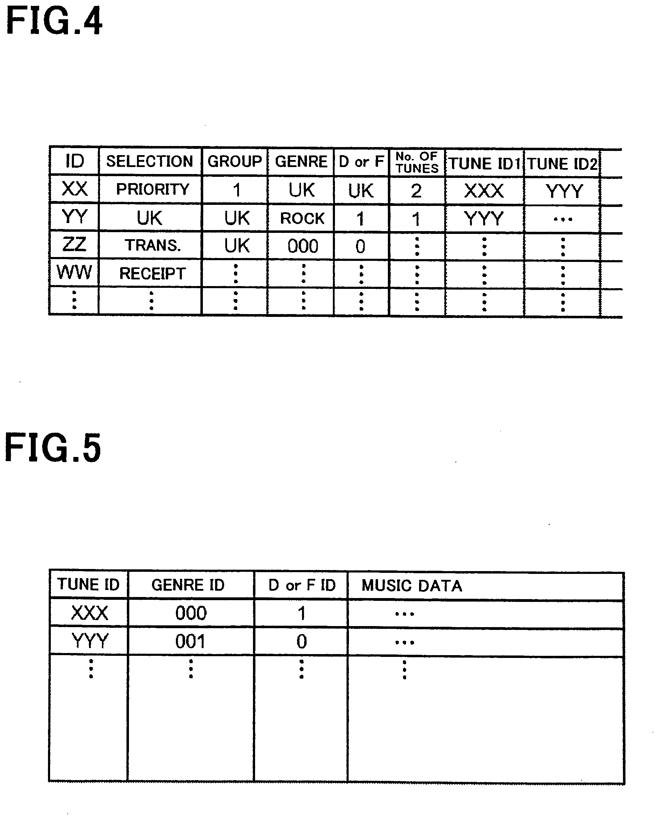

FIG. 4 illustrates an example of a database used for assigning a tune and so on to each of persons with whom a user of the mobile phone makes communication.

Simply speaking, the database defines how a certain tune is assigned to a certain person.

Into the database illustrated in FIG. 4 are recorded "ID" used for identifying a person, "Selection" indicating how BGM is output, "Group" indicating whether assignment is given to each of groups, "Genre" indicating a category of music, "D or F" indicating either domestic music or foreign music, "No. of tunes" indicating a number of tunes, and "Tune ID1", "Tune ID2", · · ·, "Tune IDn" each identifying a particular tune.

For instance, the uppermost data in FIG. 4 indicates that a mode "priority" is assigned to a person having ID "XX", the person "XX" belongs to a group "1", a genre for the person is "UK (UnKnown)", that is, not determined, whether domestic or foreign music for the person is "UK", that is, not determined, a number of tunes is "2", that is, two tunes are assigned to the person, and "XXX" and "YYY" are assigned to the person as "tune ID1" and "tune ID2", respectively. For instance, a single tune or a plurality of tunes may be assigned to a person, and only "genre", "D or F" or "genre" and "D or F" may be assigned to a person.

The category "Group" includes many groups such as "a friend" defined by a user of the mobile phone. A person to be recorded in the mobile phone belongs to one of groups. "Group assign" means assigning a tune to each of groups. Accordingly, the same tune is assigned to persons belonging to the same group.

The category "Selection" indicates how BGM is selected. The category "Selection" is selected among four options "priority", "transmission", "receipt" and "UK (UnKnown)".

In a "priority" mode, regardless of whether a user of the mobile phone calls or a user of the mobile phone receives a call, BGM is output to a person to which a user of the mobile phone gives a call or a person who calls to a user of the mobile phone, in accordance with conditions determined on the database by a user of the mobile phone.

In a "transmission" mode, when a user of the mobile phone calls, BGM is output to a person to whom a user of the mobile phone gives a call, in accordance with conditions determined on the database by a user of the mobile phone.

In a "receipt" mode, when a user of the mobile phone receives a call, BGM is output to a person who gives a call to a user of the mobile phone, in accordance with conditions determined on the database by a user of the mobile phone.

A mode "UK (UnKnown)" means that any mode is not selected among the above-mentioned three modes.

BGM is output in accordance with one of the above-mentioned four modes. When the mobile phone makes connection with another one, modes of the mobile phones are sometimes inconsistent with each other. Solution to such a case is explained later.

FIG. 5 illustrates an example of the tune database.

As illustrated in FIG. 5, the tune database includes a tune ID used for identifying a tune, a genre ID, D or F (domestic or foreign) ID, and music data.

The tune ID corresponds to "Tune ID1", "Tune ID2", · · ·, and "Tune IDn" illustrated in FIG. 3, and is associated with each of later-mentioned random numbers.

The genre ID indicates a genre selected by a user among natural sounds such as waves and birds, rock'n roll, popular music and so on.

The D or F ID indicates whether a domestic or foreign tune is selected. For instance, "1" indicates a domestic tune, and "2" indicates a foreign tune.

The music data includes data of timbre, pitch, length, intensity and velocity, and music-speed data.

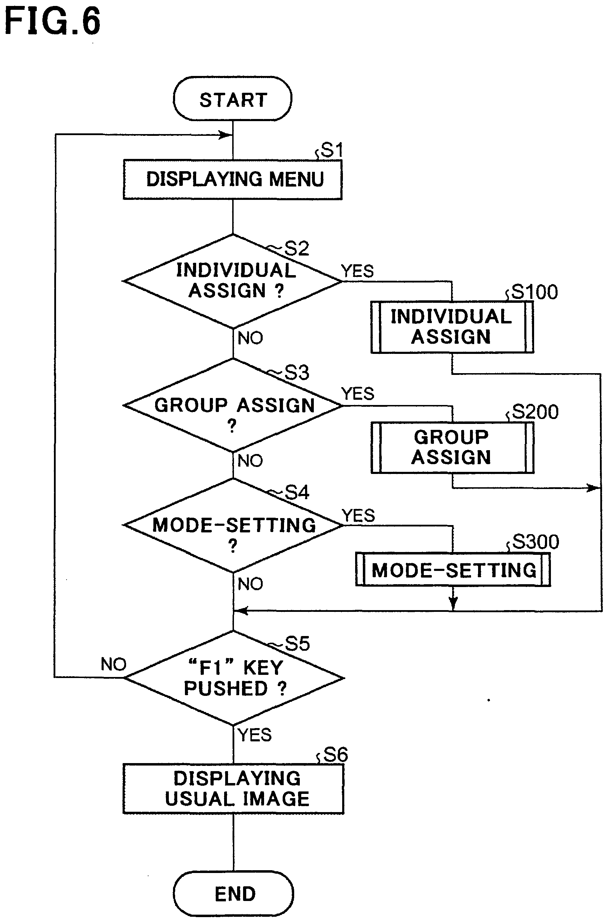

Hereinbelow, how BGM is output in the mobile phone in accordance with the first embodiment is explained with reference to FIGs. 6 to 12. This is carried out by the central processing unit 3 by executing the program stored in the memory card 8.

FIG. 6 is a flow chart of a main routine for carrying out outputting of BGM. The following process is carried out in each of steps of the program.

Step S1: A menu is displayed in the first display 10. The menu includes "individual assign", "group assign" and "mode-setting".

Step S2: It is judged whether "individual assign" is selected. If selected (YES in step S2), an individual assign routine is carried out in step S100, and if not (NO in step S2), step S3 is carried out.

Step S3: It is judged whether "group assign" is selected. If selected (YES in step S3), a group assign routine is carried out in step S200, and if not (NO in step S3), step S4 is carried out.

Step S4: It is judged whether "mode-setting" is selected. If selected (YES in step S4), a mode-setting routine is carried out in step S300, and if not (NO in step S4), step S5 is carried out.

Step S5: It is judged whether the F1 key 103 is compressed. If compressed (YES in step S5), step S6 is carried out, and if not (NO in step S5), step S1 is carried out again.

Step S6: Usual image is displayed in the first display 10. The usual image means image displayed in the first display 10 when no commands are input into the mobile phone.

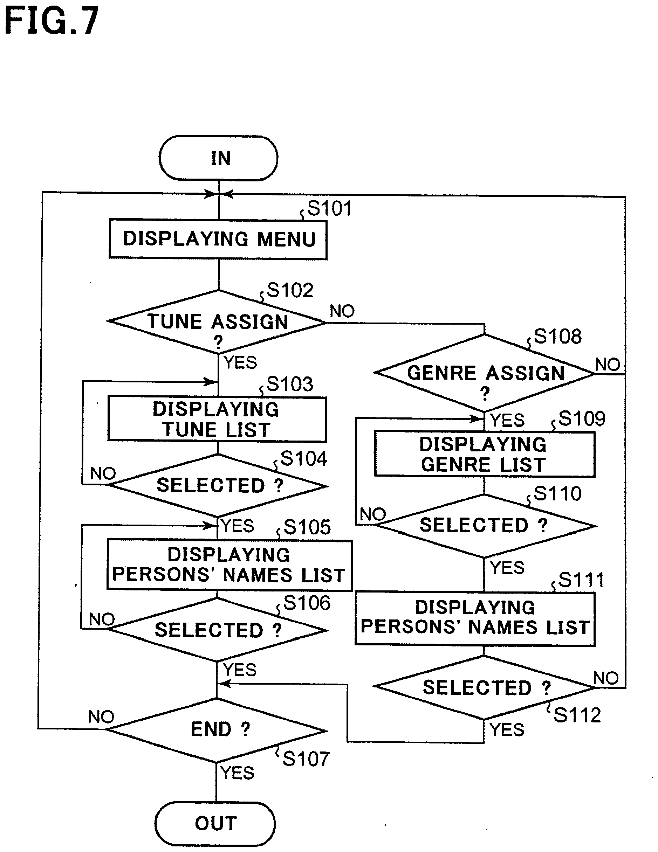

FIG. 7 is a flow chart showing the individual assign routine 100 illustrated in FIG. 6.

Step S101: A menu is displayed in the first display 10. The menu includes "tune assign" and "genre assign".

Step S102: A user of the mobile phone can select "tune assign" or "genre assign" by pointing one of them with the cursor key 103d illustrated in FIG. 1, and compressing the F3 key 103c. In step S102, it is judged whether "tune assign" is selected. If selected (YES in step S102), step S103 is carried out, and if not (NO in step S102), step S108 is carried out.

Herein, "tune assign" means assigning a tune to be used as BGM to each of recorded persons. For instance, a tune A is assigned to a person X, and a tune B is assigned to a person Y.

Step S103: A tune list is displayed in the first display 10. For instance, tune titles are displayed vertically in the first display 10. A screen of the first display 10 can be scrolled by upwardly or downwardly pushing the cursor key 103d, and a selected tune title is emphasized by the cursor key 103d.

Step S104: It is judged whether a tune is selected. If selected (YES in step S104), step S105 is carried out, and if not (NO in step S104), step S103 is carried out again.

Step S105: A list of the persons' names is displayed in the first display 10. The list of the persons' names lists up names of persons registered in the mobile phone. For instance, names of such persons are listed vertically in a screen of the first display 10. A screen of the first display 10 can be scrolled by upwardly or downwardly pushing the cursor key 103d, and a selected person is emphasized by the cursor key 103d.

Step S106: It is judged whether a certain person is selected by judging whether the F3 key 103c is compressed. If selected (YES in step S106), step S107 is carried out, and if not (NO in step S106), step S105 is carried out again.

Step S107: It is judged whether ending the routine is requested by judging whether the F2 key 103b is compressed. If selected (YES in step S107), step S5 in the flow chart illustrated in FIG. 6 is carried out, and if not (NO in step S107), step S101 is carried out again.

Step S108: It is judged whether the genre assign is selected out of the menu. If selected (YES in step S108), step S109 is carried out, and if not (NO in step S108), step S101 is carried out again.

Step S109: The genre list is displayed in the first display 10. In the genre list, genres, for instance, natural sounds such as waves and birds, rock'n roll, jazz, popular music, classic music, folk songs, domestic traditional songs, ethnic music and so on are displayed vertically in a screen of the first display 10. A screen of the first display 10 can be scrolled by upwardly or downwardly pushing the cursor key 103d, and a selected genre is emphasized by the cursor key 103d.

Step S110: It is judged whether a certain genre is selected by judging whether the F3 key 103c is compressed. If selected (YES in step S110), step S111 is carried out, and if not (NO in step S110), step S109 is carried out again.

Step S111: The same processing as that of step S105 is carried out.

Step S112: The same processing as that of step S106 is carried out.

Steps to be carried out in the group assign routine S200 are identical with the steps carried out in the individual assign routine S100, having been explained with respect to FIG. 7, except that "displaying persons' names list" in steps S105 and S100 is replaced with "displaying a group list" in FIG. 7, and "a list of persons' names" and "a group list" are replaced with "a registered person" and "a group", respectively, in the description about the flow chart illustrated in FIG. 7.

Herein, "a group" is comprised of a single registered person or a plurality of registered persons, and is identical in concept with "a holder" in a personal computer.

For instance, a holder named "friends" includes registered persons who a user of the mobile phone recognizes as a friend, and a holder named "companies" includes registered persons who a user of the mobile phone recognizes as persons belonging to companies with which a user of the mobile phone has a business relation. Whereas a tune is assigned to each of registered persons in the individual assign routine S100, a tune is assigned to each of groups in the group assign routine S200.

Accordingly, a user of the mobile phone has a merit that up-tempo music such as rock'n roll may be assigned to a group categorized as "friends", and slow-tempo music such as classic may be assigned to a group categorized as persons belonging to companies with which a user of the mobile phone has a business relation.

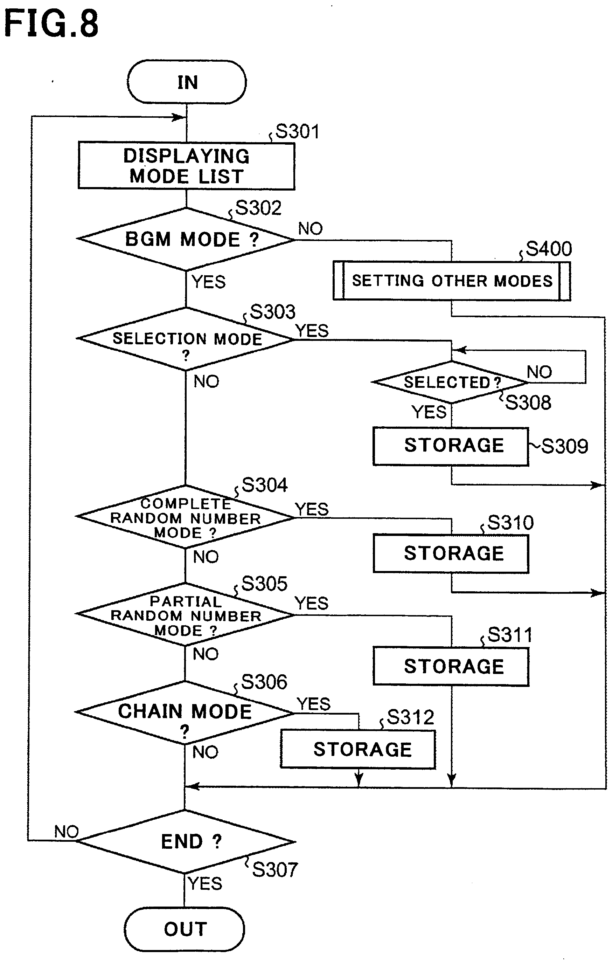

FIG. 8 is a flow chart showing steps to be carried out in the mode-setting routine S300.

Step S301: A mode list is displayed in the first display 10. The mode list includes five modes, that is, a BGM mode, a selection mode, a complete random number mode, a partial random number mode, and a chain mode, and further includes a plurality of modes found in a conventional mobile phone. Among these modes, one mode is selected by pointing a target mode with the cursor key 103d, and compressing the F3 key 103c.

Step S302: It is judged whether the BGM mode is selected. If selected (YES in step S302), step S303 is carried out, and if not (NO in step S302), step S400 is carried out.

Step S303: It is judged whether the selection mode is selected. If selected (YES in step S303), step S308 is carried out, and if not (NO in step S303), step S304 is carried out.

In the selection mode, it is determined whether BGM set by a person with whom a user of the mobile phone makes communication has priority over BGM set by a user of the mobile phone, and vice versa. There are three options: which one is selected among BGM set by a person with whom a user of the mobile phone makes communication and BGM set by a user of the mobile phone, when a user receives a call; which one is selected among BGM set by a person with whom a user of the mobile phone makes communication and BGM set by a user of the mobile phone, when a user calls; and which one is selected among BGM set by a person with whom a user of the mobile phone makes communication and BGM set by a user of the mobile phone, when a user receives a call and when a user calls.

In step S308, it is judged whether any one of the three options is selected. If selected (YES in step S308), the selected option is stored in step S309, and if not (NO in step S308), step S308 is carried out again.

Step S304: It is judged whether the complete random number mode is selected. If selected (YES in step S304), the selection of the complete random number is stored in step S310, and if not (NO in step S304), step S305 is carried out. In the complete random number mode, a random number is produced when the mobile phone makes a call to another or receives a call, and then, the mobile phone outputs BGM associated with the thus produced random number, while a user of the mobile phone makes communication with another.

A number of the produced random numbers is equal to a number of the registered tunes, and hence, a tune ID certainly exists in association with the produced random number. Furthermore, a random number is produced within a range of the number of the registered tunes. For instance, if 10 tunes are registered, a tune ID is in the range of 1 to 10 both inclusive, in which case, a random number is produced in the range of 1 to 10.

Step S305: It is judged whether the partial random number mode is selected. If selected (YES in step S305), the selection of the partial random number is stored in step S311, and if not (NO in step S305), step S306 is carried out. In the partial random number mode, if two or more tunes are assigned to a certain registered person, if a genre is assigned to the certain registered person, if "D or F" (domestic or foreign music) is assigned to the certain registered person, or if one of genre and "D or F" is assigned to the certain registered person, a tune associated with the produced random number is selected among these.

Specifically, whereas a tune associated with the produced random number is selected among all of the registered tunes in the complete random number mode, a tune associated with the produced random number is selected among a limited number of the registered tunes in the partial random number mode. For instance, assuming that "rock'n roll" and "D (domestic)" are assigned to a certain registered person, a tune associated with the produced random number is selected among the registered domestic rock'n roll tunes.

Step S306: It is judged whether a chain mode is selected. If selected (YES in step S306), the selection of the chain mode is stored in step S312, and if not (NO in step S306), step S307 is carried out. Specifically, it is judged whether the F2 key 103b is compressed. If compressed (YES in step S307), step S5 illustrated in FIG. 5 is carried out, and if not (NO in step S307), step S301 is carried out again.

In the chain mode, if two or more tunes are assigned to a certain registered person, if a genre is assigned to the certain registered person, if "D or F" (domestic or foreign music) is assigned to the certain registered person, or if one of genre and "D or F" is assigned to the certain registered person, different tunes are successively output before the communication ends. In other words, if a tune ends before the communication ends, a next tune is output.

If the above-mentioned complete and partial random number modes are not selected, the mobile phone operates in a normal BGM mode in which a tune associated with a registered person is output as BGM, or in a combination mode of the normal BGM mode and the chain mode.

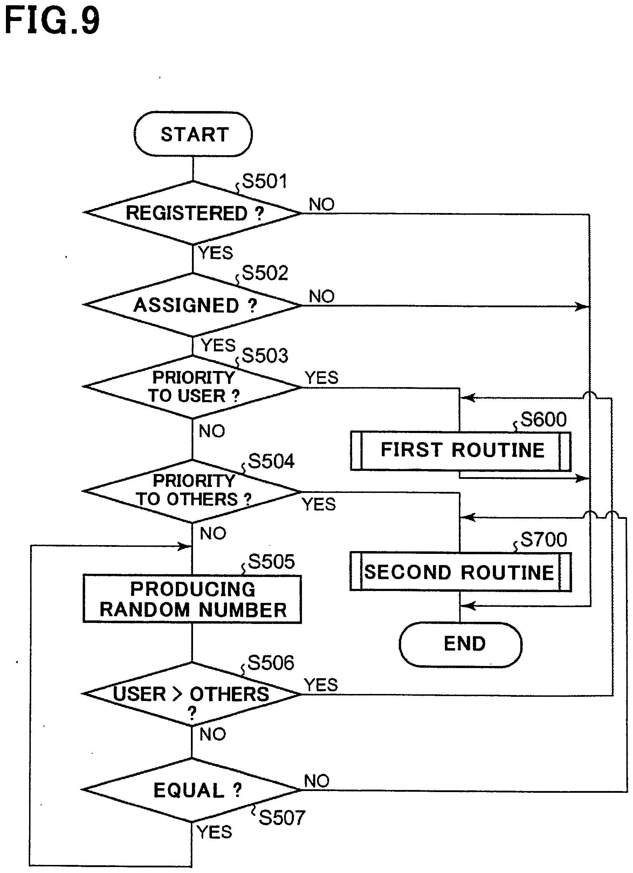

FIG. 9 is a flow chart showing steps to be carried out for outputting BGM when a channel has been established, and communication between a caller and a call-receiver can be now made.

When a channel has been established between the mobile phone of a user and a mobile phone of a person with whom the user makes communication, the following steps are carried out.

Step S501: It is judged whether a telephone number of a caller is registered, when a user of the mobile phone receives a call, and it is judged whether a telephone number of a person with whom the user is going to make communication is registered, when the user calls the person. If registered (YES in step S501), step S502 is carried out, and if not (NO in step S501), a normal mode in which the user makes communication without BGM starts.

When the user receives a call, if a caller does not set his/her mobile phone to prohibit informing the user of his/her telephone number, his/her telephone number is stored in the random access memory 5. When the user calls, a telephone number of a person to which the user calls is stored in the random access memory 5. The central processing unit 3 reads data about telephone numbers stored in the random access memory 5, and checks whether a read-out telephone number is registered in a database of the memory card 8.

Step S502: It is judged whether a tune is assigned to a registered person. If assigned (YES in step S502), step S503 is carried out, and if not (NO in step S502), a normal mode in which the user makes communication without BGM starts. Even if a person is registered, if a tune is not assigned to the person, a user of the mobile phone would make communication with the person without BGM.

Step S503: It is judged whether priority is put on the mobile phone of a user. If so (YES in step S503), step S600 is carried out, and if not (NO in step S503), step S504 is carried out.

Step S504: It is judged whether priority is put on the mobile phone of a person with whom the user makes communication. If so (YES in step S504), step S700 is carried out, and if not (NO in step S504), step S505 is carried out.

Hereinbelow is explained a priority in outputting BGM in accordance with either data stored in the mobile phone of a user or data stored in a mobile phone of a person with whom the user makes communication with. A parameter for setting a priority is selected among "priority", "transmission", "receipt" and "UK".

In the "priority" mode, data stored in the mobile phone of a user has a priority except that a mobile phone of a person with whom the user makes communication with is set in the "priority" mode.

In the "transmission" mode, data stored in the mobile phone of a user has a priority, when the mobile phone of a user calls.

In the "receipt" mode, data stored in the mobile phone of a user has a priority, when the mobile phone of a user receives a call.

The "UK (UnKnown)" mode means that any mode is not selected among the above-mentioned three modes.

Hereinbelow are shown combinations of settings of the mobile phone of a user and a mobile phone of a person with whom the user makes communication with, and the step to be carried out in each of the combinations.

### (In the case that the mobile phone of a user calls)

(1) When the user is in "priority" mode, and the person is in "priority" mode, step S505 is carried out.
(2) When the user is in "priority" mode, and the person is in "transmission" mode, step S600 is carried out.
(3) When the user is in "priority" mode, and the person is in "UK" mode, step S600 is carried out.
(4) When the user is in "transmission" mode, and the person is in "priority" mode, step S700 is carried out.
(5) When the user is in "transmission" mode, and the person is in "transmission" mode, step S600 is carried out.
(6) When the user is in "transmission" mode, and the person is in "UK" mode, step S600 is carried out.
(7) When the user is in "transmission" mode, and the person is in "receipt" mode, step S505 is carried out.
(8) When the user is in "receipt" mode, and the person is in "priority" mode, step S700 is carried out.
(9) When the user is in "receipt" mode, and the person is in "transmission" mode, step S505 is carried out.
(10) When the user is in "receipt" mode, and the person is in "UK" mode, step S700 is carried out.

### (In the case that the mobile phone of a user receives a call)

(1) When the user is in "priority" mode, and the person is in "priority" mode, step S505 is carried out.
(2) When the user is in "priority" mode, and the person is in "transmission" mode, step S600 is carried out.
(3) When the user is in "priority" mode, and the person is in "UK" mode, step S600 is carried out.
(4) When the user is in "transmission" mode, and the person is in "priority" mode, step S700 is carried out.
(5) When the user is in "transmission" mode, and the person is in "transmission" mode, step S700 is carried out.
(6) When the user is in "transmission" mode, and the person is in "UK" mode, step S700 is carried out.
(7) When the user is in "transmission" mode, and the person is in "receipt" mode, step S505 is carried out.
(8) When the user is in "receipt" mode, and the person is in "priority" mode, step S700 is carried out.
(9) When the user is in "receipt" mode, and the person is in "transmission" mode, step S505 is carried out.
(10) When the user is in "receipt" mode, and the person is in "UK" mode, step S600 is carried out.

Step S505: A random number is produced. A random number may be produced in each of the mobile phone of a user and a mobile phone of a person with whom the user makes communication, in which case, the thus produced random numbers are transmitted to each other, and it is determined which one of the mobile phones has a priority by comparing the random numbers to each other. As an alternative, one of the mobile phones is determined to produce two random numbers, in which case, one is assigned to the mobile phone of the user and the other is assigned to a mobile phone of the person, and the two random numbers are compared to each other.

Step S506: It is judged whether a random number produced in the mobile phone of a user is greater than a random number produced in a mobile phone of the person. If so, step S600 is carried out, and if not, step S507 is carried out.

Step S507: It is judged whether a random number produced in the mobile phone of a user is equal to a random number produced in a mobile phone of the person. If so, step S505 is carried out, and if not, step S700 is carried out.

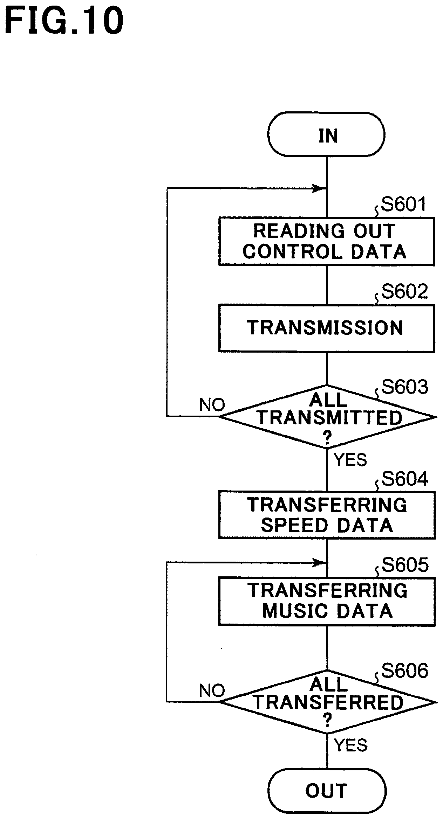

FIG. 10 is a flow chart showing steps to be carried out in the first routine S600 in which BGM is produced in accordance with data stored in the mobile phone of a user.

Step S601: The control data about a person with whom a user of the mobile phone makes communication is read out of the memory card 8.

Step S602: The thus read-out control data is transmitted to a mobile phone of the person through the signal processing circuit 2 and the antenna 1.

Step S603: It is judged whether all of the control data has been transmitted. If transmitted (YES in step S603), step S604 is carried out, and if not (NO in step S603), step S601 is carried out.

Step S604: The tempo or speed data included in the read-out control data is transmitted to the sound source 19. The transmission of the tempo data to the sound source 19 is delayed until a mobile phone of the person receives the control data to thereby output sound, in order to make it possible for the mobile phones to be able to simultaneously output sound.

Step S605: The music data included in the read-out control data is transmitted to the sound source 19. Then, the sound source 19 produces and outputs sound in accordance with the received tempo data and music data.

Step S606: It is judged whether all of the music data has been transmitted to the sound source 19. If transmitted (YES in step S606), the first routine S600 ends up, and if not (NO in step S606), step S605 is carried out again.

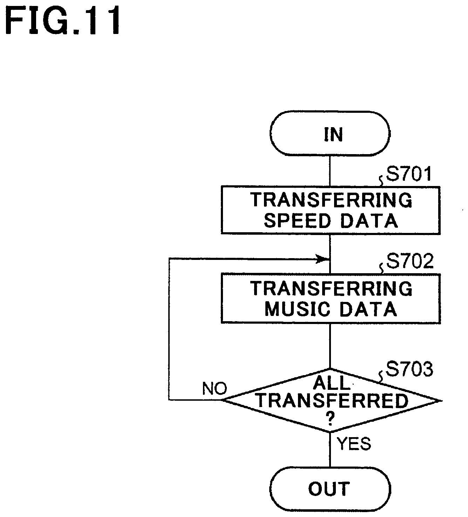

FIG. 11 is a flow chart showing steps to be carried out in the second routine S700 in which BGM is produced in accordance with data stored in a mobile phone of a person with whom a user of the mobile phone makes communication.

Step S701: The tempo data included in the control data having been received from a mobile phone of the person is transferred to the sound source 19.

Step S702: The music data included in the control data having been received from a mobile phone of the person is transferred to the sound source 19.

Step S703: It is judged whether all of the music data has been transferred to the sound source 19. If transferred (YES in step S703), the second routine S700 ends up, and if not (NO in step S703), step S702 is carried out again.

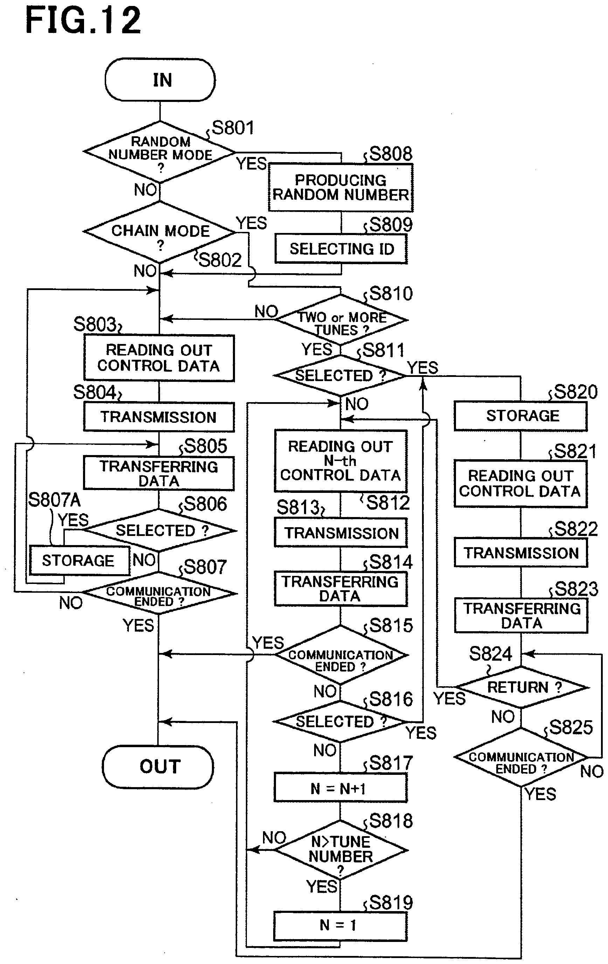

FIG. 12 is a flow chart showing steps to be carried out for producing BGM in accordance with the complete random number mode, the partial random number mode, or the chain mode.

Since the complete random number mode and the partial random number mode are different from each other only in a range of data based on which a random number is produced, and have the same steps after a random number has been produced, they are referred to simply as a random number mode.

Furthermore, a step of "is all transmitted or transferred ?" to be carried out immediately subsequently to a step of "transmission" or "data transfer" is omitted in FIG. 12 in order to avoid complexity in the flow chart and description thereof.

Step S801: It is judged whether the random number mode is set. If set (YES in step S801), step S808 is carried out, and if not (NO in step S801), step S802 is carried out.

Step S802: It is judged whether the chain mode is set. If set (YES in step S802), step S810 is carried out, and if not (NO in step S802), step S803 is carried out.

Step S803: The control data assigned to a person with whom a user of the mobile phone makes communication with is read out of the memory card 8.

Step S804: The control data having been read out of the memory card 8 is transmitted to a mobile phone of the person through the signal processing circuit 2 and the antenna 1.

Step S805: The tempo data and the music data both included in the control data are transferred to the sound source 19.

Step S806: It is judged whether a tune is selected. If selected (YES in step S806), step S808 is carried out, and if not (NO in step S806), step S807 is carried out.

A tune is selected by a user by operating the control keys 103 for displaying a tune list in the first display 10 while a user makes communication with the person in BGM mode or without BGM, selecting his/her favorite tune with the cursor key 103d, and compressing the F3 key 103c for finalizing the tune.

Thus, a user can select a tune which the user wants the person to listen to during the communication, or the user himself/herself wants to listen to.

Step S807A: A tune ID of the thus selected tune is stored in the random access memory 5. Thus, it is possible to read the control data having a tune ID stored in the random access memory 5, in which case, the control data is transmitted to a mobile phone of the person, and to read the music and tempo data having a tune ID stored in the random access memory 5, in which case, the music and tempo data is used in the mobile phone of a user.

Step S807: It is judged whether the communication ends up. If so (YES in step S807), the second routine S700 ends, and if not (NO in step S807), step S805 is carried out again.

Step S808: A random number is produced.

Step S809: A tune ID associated with the thus produced random number is selected. Then, the control data associated with the thus selected tune ID is read out in step S803.

Step S810: It is judged whether two or more tunes are assigned to the person with whom a user of the mobile phone makes communication. If so (YES in step S810), step S811 is carried out, and if not (NO in step S810), step S803 is carried out again. Step S810 is carried out because the chain mode is a mode in which the registered tunes are successively output, and hence, cannot be carried out unless "two" or more tunes are registered.

Step S811: Step S811 is carried out in the same manner as Step S806.

Step S812: The control data associated with an N-th tune ID among a plurality of tune IDs assigned to the person with whom a user of the mobile phone makes communication is read out. The variable N starts from one (1) which indicates a first tune.

Step S813: The thus read-out control data is transmitted to a mobile phone of the person through the signal processing circuit 3 through the antenna 1.

Step S814: The tempo and music data included in the read-out control data is transferred to the sound source 19. As having been explained, the transfer of the tempo and music data is delayed in order to make it possible for the mobile phones to be able to simultaneously output sound.

Step S815: It is judged whether the communication ends, that is, channel connection is terminated. If so (YES in step S815), the routine illustrated in FIG. 12 ends, and if not (NO in step S815), step S816 is carried out. Step S816: Step S816 is carried out in the same manner as step S811. Step S817: One (1) is added to the variable N.

Step S818: It is judged whether the variable N is greater than a number of registered tunes. If so (YES in step S818), step S819 is carried out, and if not (NO in step S818), step S812 is carried out.

Step S819: The variable N is reset to one (1).

Step S820: Step S816 is carried out in the same manner as step S808.

Step S821: The control data associated with a tune ID selected during the communication is read out of the memory card 8.

Step S822: The thus read-out control data is transmitted to a mobile phone of the person through the signal processing circuit 2 and the antenna 1.

Step S823: The tempo and music data included in the read-out control data is transferred to the sound source 19. As having been explained, the transfer of the tempo and music data is delayed in order to make it possible for the mobile phones to be able to simultaneously output sound.

Step S824: It is judged whether "return" is selected. If selected (YES in step S812), step S812 is carried out, and if not (NO in step S824), step S825 is carried out. Herein, "return" indicates that a user of the mobile phone, after selecting a tune during the communication, returns the mobile phone into the previous chain mode or random number mode for outputting BGM. The "return" is carried out by compressing the F1 key 103a.

Step S825: It is judged whether the communication ends up, that is, channel connection is terminated. If so (YES in step S825), the routine illustrated in FIG. 12 ends, and if not (NO in step S825), step S824 is carried out again.

### [Second Embodiment]

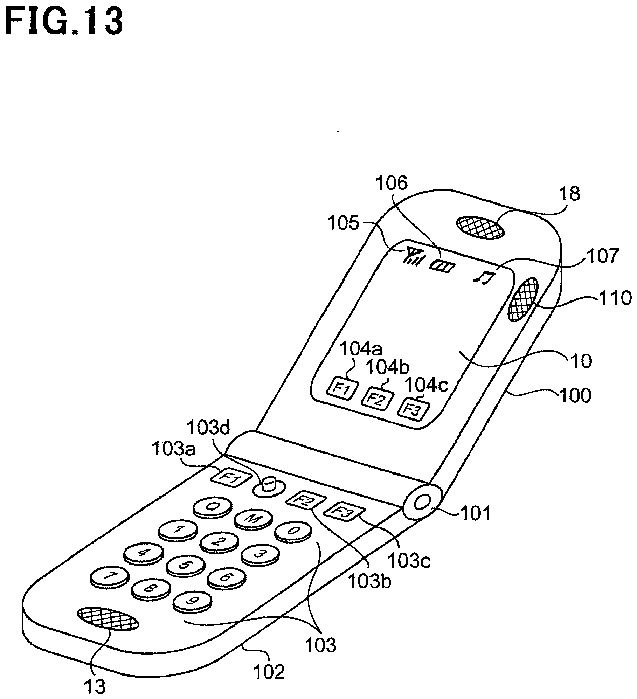

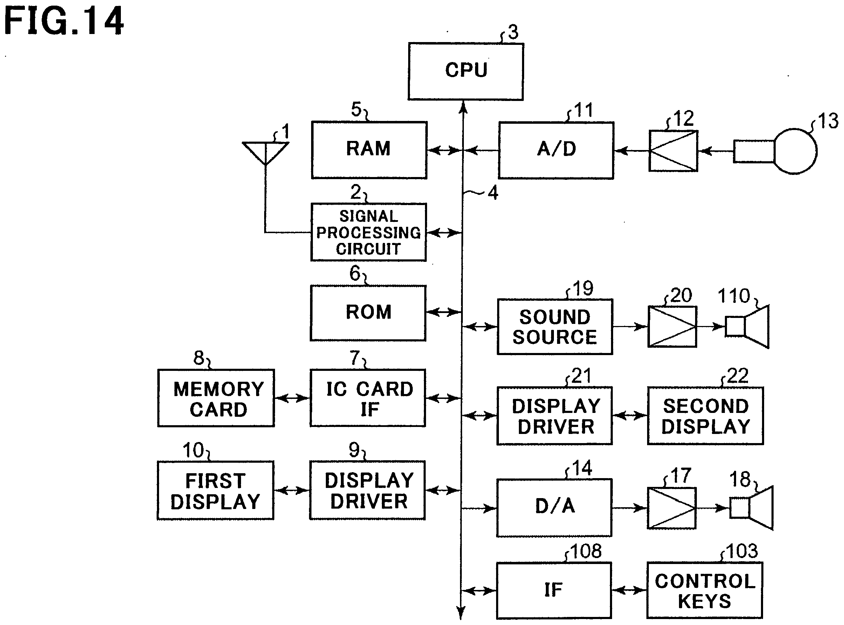

FIG. 13 is a perspective view of a mobile phone in accordance with the second embodiment of the present invention, and FIG. 14 is a block diagram of the mobile phone illustrated in FIG. 13.

Hereinbelow is explained the mobile phone in accordance with the second embodiment with reference to FIGs. 13 and 14. In FIG. 13, parts or elements that correspond to those of the mobile phone illustrated in FIG. 1 have been provided with the same reference numerals, and are not explained. Similarly, in FIG. 14, parts or elements that correspond to those of the mobile phone illustrated in FIG. 2 have been provided with the same reference numerals, and are not explained.

As illustrated in FIGs. 13 and 14, the mobile phone in accordance with the second embodiment is designed to additionally include a sub-speaker 110 in comparison with the mobile phone in accordance with the first embodiment illustrated in FIGs. 1 and 2. The mobile phone in accordance with the second embodiment is structurally different from mobile phone in accordance with the first embodiment illustrated only in additionally including the sub-speaker 110.

As illustrated in FIG. 13, the sub-speaker 110 is arranged on an inner surface of the upper housing 100 of the mobile phone, similarly to the speaker 18.

In the second embodiment, BGM is output through the sub-speaker 110. BGM output through the sub-speaker 110 propagates in the air to the microphone 13, and is transmitted to a mobile phone of a person with whom a user of the mobile phone makes communication, through the microphone 13 together with voices of the user. Simultaneously, the user can listen to BGM output through the sub-speaker 110.

The mobile phone in accordance with the second embodiment provides an advantage that the addition of the sub-speaker 110 makes it no longer necessary to carry out the steps as having been carried out in the first embodiment.

### [Third Embodiment]

In the above-mentioned first and second embodiments, the control data is transmitted to a person with whom a user of the mobile phone makes communication, in which case, the mobile phones of the user and the person are necessary to store a program for deleting the control data received from the other after the communication ended, or for enabling the control data to be reproduced without receipt of authorization from a particular organization such as a copy-right managing server, with respect to tunes other than copy-right free tunes.

In order to avoid the mobile phone from storing such a program therein, the mobile phone in accordance with the third embodiment is designed to output a tune or tunes in advance assigned to a person with whom a user of the mobile phone makes communication, only in the mobile phone of a user, both when a user calls or receives a call. To this end, the "selection" illustrated in FIG. 4 is deleted, and the music data associated with a tune ID assigned to the person is just transferred to the sound source 19 for outputting BGM. In the third embodiment, if tunes, a number of tunes, and an order of outputting tunes, registered by a user for the person, are different from the same registered by the person for a user, a tune which a user listens to as BGM is different from a tune which the person listens to as BGM.

In the third embodiment, it is no longer necessary to carry out the steps relating to the above-mentioned "selection". Specifically, the control data illustrated in FIG. 3, steps S303 and S308 in FIG. 8, steps S503, S504, S505, S506, S507, and S700 in FIG. 9, steps S602 and S603 in FIG. 10, the routine illustrated in FIG. 11, steps S804, S813 and S822 in FIG. 12 are all omitted in the third embodiment.

### [Fourth Embodiment]

In the above-mentioned first to third embodiments, a random number is produced in order to determine which one of a user and a person with whom the user makes communication has a priority, after a channel has been established between them.

In the fourth embodiment, each of the mobile phones of the user and the person is designed to produce a random number before a channel is established between them. The thus produced random numbers are first transmitted to each other after a channel has been established between them. Thus, it would be possible to determine which one of the mobile phones has a priority immediately when a channel has been established between them.

### [Fifth Embodiment]

In the above-mentioned first to fourth embodiments, once a mobile phone having a priority has been determined, a tune is output as BGM in accordance with conditions set by a user of the determined mobile phone.

In the fifth embodiment, if a tune is output in accordance with conditions set by a user, the next tune is output in accordance with a person with whom the user makes communication. Specifically, tunes determined in accordance with conditions set by a user and tunes determined by the person are alternately output as BGM.

### [Sixth Embodiment]

In the sixth embodiment, in the above-mentioned cases (1), (7) and (9) to be carried out when the mobile phone of a user calls, step S600 may be carried out in place of step S505. Similarly, in the above-mentioned cases (1), (7) and (9) to be carried out when the mobile phone of a user receives a call, step S700 may be carried out in place of step S505.

### [Seventh Embodiment]

In the seventh embodiment, a priority is not assigned to a user of the mobile phone and a person with whom the user makes communication, after a channel has been established between them. It is decided as a format that a priority is assigned to a mobile phone which calls, or that a priority is assigned to a mobile phone which receives a call.

The seventh embodiment makes it possible to reduce a number of step to be carried out in comparison with the above-mentioned first to sixth embodiments, and avoid delay in outputting BGM, which is caused because a priority is assigned to one of the mobile phones after a channel has been established between them.

### [Eighth Embodiment]

In the eighth embodiment, only a tune ID is transmitted to each other without transmitting the control data to each other. This ensures reduction in communication traffic.

However, a user of the mobile phone and a person with whom the user makes communication through the mobile phone cannot listen to a common tune, unless the control data associated with a common tune is stored in the memory card 8 of the mobile phones of them. In other words, a user and the person can listen to a common tune without transmitting data about the tune to each other.

If the control data of a tune indicated by a user is not stored in the memory card 8, any one of tunes having control data stored in the memory card 8 may be output as BGM, or tune IDs may be transmitted until the control data of a tune indicated by a user is found, in which case, one of a user and the person transmits a signal indicating that an indicated tune is not stored in the memory card 8, to the other, and the other, on receipt of the signal, transmits a tune ID associated with another tune to one of a user and the person, until the control data of an indicated tune is found. As an alternative, a user and the person may listen to different tunes from each other.

### [Ninth Embodiment]

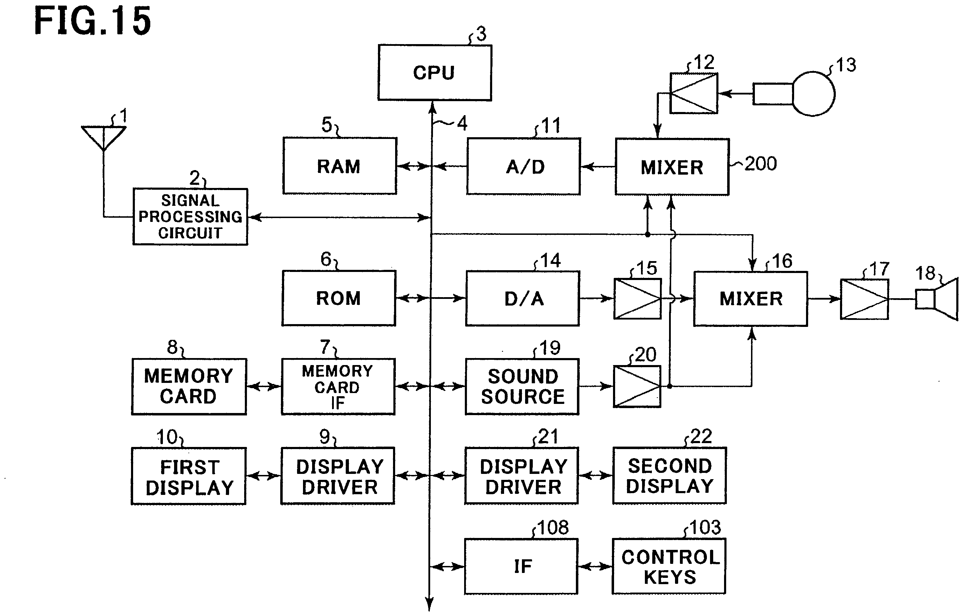

FIG. 15 is a block diagram of a mobile phone in accordance with the ninth embodiment of the present invention. In FIG. 15, parts or elements that correspond to those of the mobile phone illustrated in FIG. 2 have been provided with the same reference numerals, and are not explained.

The control data is not transmitted to each other in the ninth embodiment. Hence, the control data illustrated in FIG. 3 and the "selection" illustrated in FIG. 4 are not used in the ninth embodiment.

In the ninth embodiment, a priority is assigned to a mobile phone which calls. To the contrary, a priority may be assigned to a mobile phone which receives a call.

Thus, a priority is assigned to the conditions determined in a mobile phone which calls. In order to avoid a copy right problem, a user who calls listens to BGM having been produced in a mobile phone of the user in accordance with the control data stored in the memory card 8 of the mobile phone of the user, and output through the speaker 18 of the mobile phone of the user, and a call-receiver listens to sound, in the form of an analog voice signal, comprised of voices of the user and BGM having been produced in the mobile phone of the user, that is, sound comprised of voices of the user and actual BGM produced in accordance with the control data

A problem with respect to a copy right is reproduction of a received tune. Since a user who receives mixed sound comprised of actual BGM sound and voices of a person with whom the user makes communication cannot extract only the BGM and reproduce the BGM having the same quality as that of the original BGM, it would be possible to protect a copy right of the BGM. In other words, the ninth embodiment keeps a caller or a call-receiver in such a condition that he/she listens to music while communication by means of a music player. Hence, the ninth embodiment does not cause a problem of copy right.

Hereinbelow is explained only differences of the ninth embodiment from the first embodiment illustrated in FIG. 2.

When a priority is assigned to the conditions determined by a caller, the caller listens to mixture sound comprised of voices of a call-receiver and BGM produced in the sound source 19 in accordance with the control data read out of the memory card 8 of the mobile phone of the caller. The mixture sound is mixed in the mixer 16, and output through the speaker 18.

The produced BGM is transmitted further to a mixer 200, in which the BGM is mixed with voices of the caller transmitted through the microphone 13 and the amplifier 12. The mixture sound of the BGM and the voices of the caller is transmitted through the signal processing circuit 2 and the antenna 1 in the form of a digital audio signal. The digital audio signal is output as sound through the speaker 18 of a mobile phone of the call-receiver.

In the ninth embodiment, similarly to the above-mentioned first to eighth embodiments, the mixers 16 and 200 are controlled by the central processing unit 3 such that a volume of voices of a caller or a call-receiver is higher than a volume of BGM. Since a ratio between a volume of voices of a caller or a call-receiver and a volume of BGM is determined in a mobile phone of a caller, the ratio is kept constant, even if a volume of BGM is made higher in a mobile phone of a call-receiver.

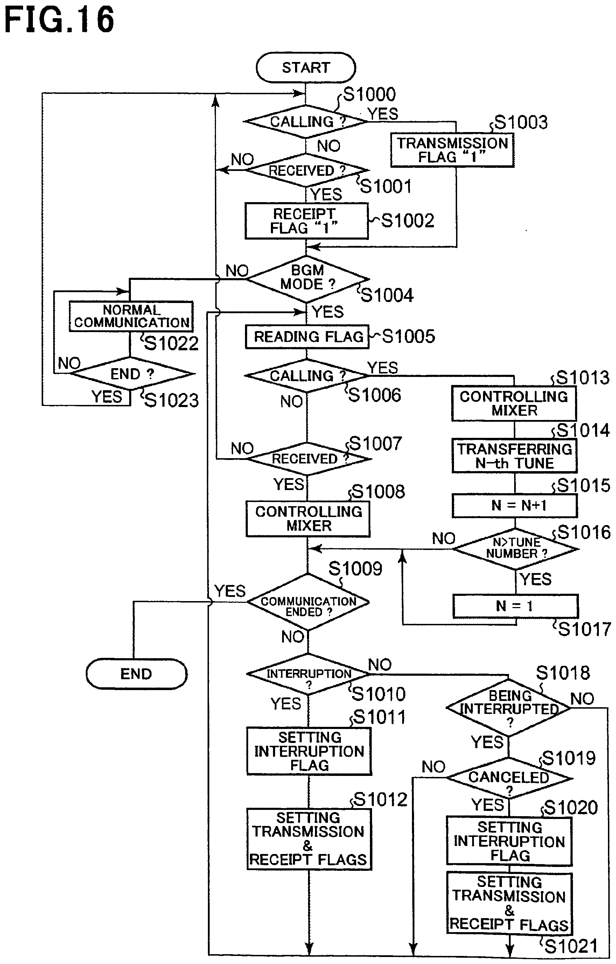

FIG. 16 is a flow chart showing steps to be carried out by the mobile phone having a structure illustrated in FIG. 15 when a user of the mobile phone makes communication with another, listening to BGM.

Step S1000: It is judged whether the mobile phone of a user calls. If so (YES in step S1000), step S1003 is carried out, and if not (NO in step S1000), step S1001 is carried out.

Step S1001: It is judged whether the mobile phone of a user receives a call. If so (YES in step S1001), step S1002 is carried out, and if not (NO in step S1001), step S1000 is carried out again.

Step S1002: A figure one (1) is stored in an area of a receipt flag assigned to the random access memory 5.

Step S1003: A figure one (1) is stored in an area of a transmission flag assigned to the random access memory 5.

Step S1004: It is judged whether a BGM mode is selected. If selected (YES in step S1004), step S1005 is carried out, and if not (NO in step S1004), step S1022 is carried out.

Step S1005: The receipt flag and the transmission flag are read out.

Step S1006: It is judged whether the transmission flag is "1". If so (YES in step S1006), step S1013 is carried out, and if not (NO in step S1006), step S1007 is carried out.

Step S1007: It is judged whether the receipt flag is "1". If so (YES in step S1007), step S1008 is carried out, and if not (NO in step S1006), step S1000 is carried out again.

Step S1008: The control to the mixers 200 and 16 is carried out. Since the receipt flag "1" indicates that the mobile phone of a user receives a call, a priority is assigned to the conditions determined by a mobile phone of a person with whom a user makes communication with.

Accordingly, the mixing control to the mixer 200 is carried out such that if a volume of voices input through the microphone 13 is 100, a volume of BGM supplied from the sound source 19 through the amplifier 20 is zero (0). In contrast, the mixing control to the mixer 16 is carried out such that if a volume of the mixture sound of BGM and voices of a person with whom a user makes communication, transmitted from a mobile phone of the person, is 100, a volume of BGM supplied from the sound source 19 through the amplifier 20 is zero (0).

Step S1009: It is judged whether communication ends, that is, a channel connection is terminated. If so (YES in step S1009), the program ends, and if not (NO in step S1009), step S1010 is carried out.

Step S1010: It is judged whether there is interruption. If so (YES in step S1010), step S1011 is carried out, and if not (NO in step S1010), step S1018 is carried out.

Herein, "interruption" is identical to "selection of a tune" (steps S806 and S808, steps S816 and S820 in FIG. 12). The interruption is used when one of a caller and a call-receiver wants to change BGM during the communication, or when it is necessary to change BGM in connection with themes of the communication. The interruption is carried out by a user or a person with whom the user makes communication by operating the control keys 103. If the person carried out the interruption, a signal indicative of having carried out the interruption is transmitted to the mobile phone of a user from a mobile phone of the person.

Step S1011: A figure one (1) is stored in an area of an interruption flag in the random access memory 5.

Step S1012: If a user of the mobile phone carries out the interruption, a figure one (1) is stored in an area of the transmission flag of the random access memory 5, and a figure zero (0) is stored in an area of the receipt flag of the random access memory 5. In contrast, a person with whom the user makes communication carries out the interruption, a number zero (0) is stored in an area of the transmission flag of the random access memory 5, and a figure one (1) is stored in an area of the receipt flag of the random access memory 5.

Step S1013: The control to the mixers 200 and 16 is carried out. Since the transmission flag "1" indicates that the mobile phone of a user calls, a priority is assigned to the conditions determined by the mobile phone of a user.

Accordingly, the mixing control to the mixer 200 is carried out such that if a volume of voices input through the microphone 13 is 100, a volume of BGM supplied from the sound source 19 through the amplifier 20 is 40. In contrast, the mixing control to the mixer 16 is carried out such that if a volume of the mixture sound of BGM and voices of a person with whom a user makes communication, transmitted from a mobile phone of the person, is 100, a volume of BGM supplied from the sound source 19 through the amplifier 20 is 40.

Step S1014: A N-th tune is transferred to the sound source 19.

Step S1015: One (1) is added to the variable N.

Step S1016: It is judged whether the variable N is greater than a number of registered tunes. If so (YES in step S1016), step S1017 is carried out, and if not (NO in step S1016), step S1009 is carried out.

Step S1017: The variable N is reset to one (1).

Step S1018: It is judged whether the interruption flag is "1". If so (YES in step S1018), step S1019 is carried out, and if not (NO in step S1018), step S1005 is carried out again.

Step S1019: It is judged whether the F1 (cancellation) key 103a is compressed. If compressed (YES in step S1019), step S1020 is carried out, and if not (NO in step S1019), step S1005 is carried out again.

Step S1020: A figure zero (0) is stored in an area of the interruption flag in the random access memory 5. As a result, a process of outputting BGM by the interruption is ceased.

Step S1021: The transmission and receipt flags in the random access memory 5 are reset to the original figures. When the interruption has been carried out, the transmission flag in the random access memory 5 was rewritten into "0" from "1", and the receipt flag in the random access memory 5 was rewritten into "1" from "0" in step S1012, the transmission flag is rewritten into "1" from "0", and the receipt flag, and the receipt flag is rewritten into "0" from "1". Thus, even if a mode in which BGM is output in accordance with the conditions set by a user of the mobile phone has been transferred into a mode in which BGM is output in accordance with the conditions set by a person with whom the user makes communication, it is possible for the user to return the current mode back into a mode in which BGM is output in accordance with the conditions set by the user.

Step S1022: Communication is made between a user of the mobile phone and the person. The mixing control to the mixers 200 and 16 is carried out such that if a volume of each of voices of the user and the person is 100, a volume of BGM supplied from the sound source 19 through the amplifier 20 is 0.

Step S1023: It is judged whether channel connection is terminated. If so (YES in step S1023), step S1000 is carried out, if not (NO in step S1022), step S1022 is carried out.

### [Tenth Embodiment]

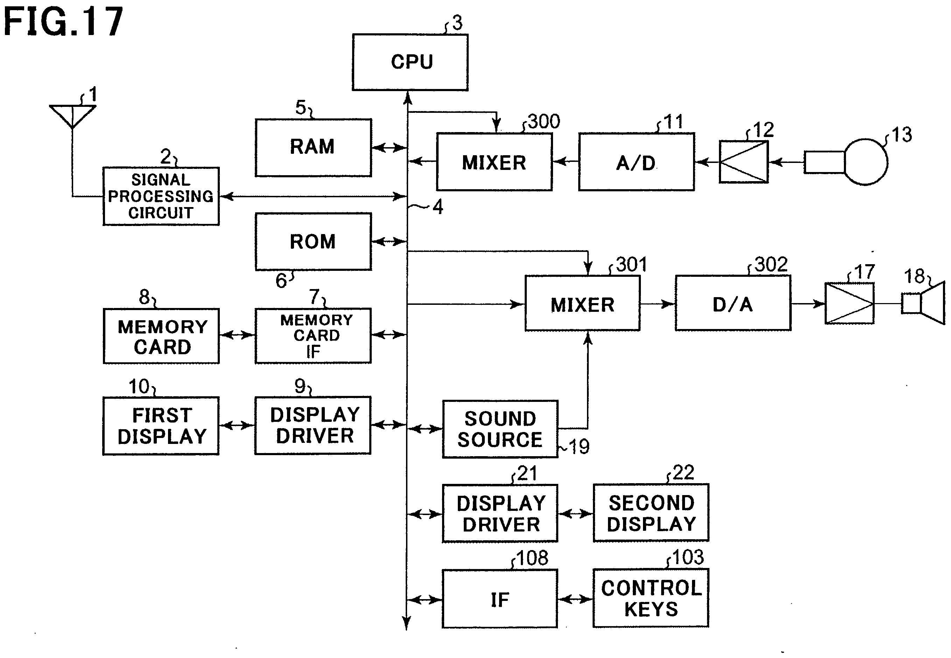

FIG. 17 is a block diagram of a mobile phone in accordance with the tenth embodiment of the present invention. In FIG. 17, parts or elements that correspond to those of the mobile phone illustrated in FIG. 15 have been provided with the same reference numerals, and are not explained.

The control data is not transmitted to each other in the tenth embodiment. Hence, the control data illustrated in FIG. 3 and the "selection" illustrated in FIG. 4 are not used in the tenth embodiment.

Whereas BGM and voices are mixed with each other in the form of analog signals in the ninth embodiment, BGM and voices are mixed with each other in the form of digital signals in the tenth embodiment.

Specifically, in the tenth embodiment, BGM and voices are mixed with each other in the form of digital signals in a mixer 300 corresponding to the mixer 200 illustrated in FIG. 15, and further, in a mixer 301 corresponding to the mixer 16 illustrated in FIG. 15. The other steps are carried out similarly to the ninth embodiment illustrated in FIGs. 15 and 16.

If the central processing unit 3 has sufficiently high processing speed, the mixture of BGM and voices in the form of digital signals can be carried out by storing a program to do so, in the memory card 8 or the read only memory 5 without necessity of designing the mobile phone to include the mixers 300 and 302.

### [Eleventh Embodiment]

In the above-mentioned first to tenth embodiments, a tune is produced by providing the control data to the sound source 19 such as FM, AM or PCM sound source.

In the eleventh embodiment, sound data encoded with MP3 (MPEG LAYER 3) format is stored in the memory card 8, and the sound data is encoded to thereby produce BGM. The thus produced BGM is supplied directly to the mixers 200 and 16.

### [Twelfth Embodiment]

In the twelfth embodiment, a ratio between a volume of voices and a volume of BGM can be varied during communication in a BGM mode.

For instance, if a user of the mobile phone wants to listen to BGM at an increased level, he/she can change the above-mentioned ratio through the control keys 103, in which case, a maximum ratio (for instance, 1:3) may be determined in advance.

In the above-mentioned first t twelfth embodiments, the present invention is applied to a mobile phone. Furthermore, the present invention can be applied to a television telephone, a television conference system, a telephone conference system, a system including personal computers which make communication with one another through IP telephone or telephone lines, and a non-mobile telephone.

## Claims

1. An apparatus for producing sound in a first electronic device being adapted for making communication with a second electronic device, the apparatus comprising:
a first mixer (16, 301) being adapted to mix sound transmitted from a sound source (19) of the first electronic device with voices transmitted between the first electronic device and second electronic device during communication with each other; and
a controller (3) being adapted to control production of sound from the sound source (19); and
the controller (3) being adapted to control the sound production in accordance with control data indicative of what sound is output from the sound source (19) and how that sound is output;
**characterized in that**
the controller (3) is adapted to control the sound production in accordance with control data received from the second electronic device during communication with the first electronic device.

2. The apparatus as set forth in claim 1, wherein the control data includes at least one information of timbre, pitch, length, intensity and velocity.

3. The apparatus as set forth in claim 1 or 2, wherein the mixer (16, 301) is adapted to mix the sound with voices transmitted from the second electronic device to the first electronic device.

4. The apparatus as set forth in claim 3, further comprising a second mixer (200) being adapted to mix the sound transmitted from the sound source (19) with voices transmitted from the first electronic device to the second electronic device.

5. The apparatus as set forth in claim 1, wherein the mixer (16, 301) is adapted to mix the sound with voices transmitted from the first electronic device to the second electronic device.

6. The apparatus as set forth in any one of claims 1 to 5, wherein the apparatus comprises a board type device applicable to a slot of an electric device.

7. The apparatus as set forth in claim 1, wherein the apparatus comprises a non-volatile memory (8) applicable to a slot of electronic device, and the first mixer (16, 301) is comprised of a program stored in the non-volatile memory (8).

8. The apparatus as set forth in claim 3, wherein the apparatus comprises a non-volatile memory (8) applicable to a slot of an electronic device, and each of the first and second mixers (16, 301; 200) is comprised of a program stored in the non-volatile memory.

9. The apparatus as set forth in one of the claims 1 to 6 comprising a transmission data provider (5, 8, 3) being adapted to output control data indicative of what sound is output from the sound source (19) and how the sound'is output during communication of the first electronic device and the second electronic device.

10. The apparatus as set forth in claim 9, wherein the transmission data provider is further adapted to output, as data to be transmitted to the second electronic device, the control data indicative of what sound is output from the sound source of the second electronic device and how the sound is output.

11. A program for causing a computer to carry out a method of producing sound during communication of a first electronic device and a second electronic device, wherein steps executed by the computer in accordance with the program include:
mixing sound transmitted from a sound source (19) of the first electronic device with voices transmitted between the first electronic device and the second electronic device during communication with each other, and
controlling the sound production in accordance with control data indicative of what sound is output from the sound source (19) and how that sound is output;
**characterized by**
controlling the sound production in accordance with control data received from the second electronic device during communication with the first electronic device.

12. The program as set forth in claim 10, wherein the control data includes at least one information of timbre, pitch, length, intensity and velocity.

13. The program as set forth in claim 11, wherein the mixing step includes mixing the sound with voices transmitted from the second electronic device to the first electronic device.

14. The program as set forth in claim 13, wherein the steps further include mixing sound transmitted from the sound source (19) with voices transmitted from the first electronic device to the second electronic device.

15. The program as set forth in claim 11, wherein the mixing step includes mixing the sound with voices transmitted from the first electronic device to the second electronic device.

16. The program as set forth in one of the claims 11 to 15, wherein the steps further include outputting the control data indicative of what sound is output from the sound source (19) of the first electronic device and how the sound is output during communication between the first electronic device and the second electronic device.

17. The program as set forth in claim 16, wherein the steps further include outputting, as data to be transmitted to the second electronic device, control data indicative of what sound is output from the sound source of the second electronic device and how the sound is output.

18. The method of producing sound transmitted during communication between a first electronic device and a second electronic device, comprising:
producing sound in the first electronic device; and
mixing the thus produced sound with either voices of a user of the first electronic device to thereby produce sound to be transmitted to the second electronic device from the first electronic device or voices of a user of the second electronic device transmitted from the second electronic device to the first electronic device; and
producing the sound in accordance with control data indicative of what sound is to be produced and how the sound is to be produced;
**characterized in that**
the sound is produced in accordance with control data received from the second electronic device during communication with the first electronic device.

19. The method as set forth in claim 18, wherein the control data includes at least one information of timbre, pitch, length, intensity and velocity.

20. The method as set forth in claim 18, wherein:
the sound is produced in accordance with control data stored in the first electronic device; and
the thus produced sound is mixed with voices of a user of the first electronic device to thereby produce sound to be transmitted to the second electronic device from the first electronic device.

21. The method as set forth in claim 18, wherein:
the sound is produced in accordance with control data transmitted from the second electronic device to the first electronic device; and
the thus produced sound is mixed with voices of a user of the second electronic device transmitted from the second electronic device to the first electronic device.

22. An electronic device comprising:
a communicator for making communication with another electronic device;
a source of sound; and
the apparatus according to claim 1.

## Patentansprüche

1. Vorrichtung zum Erzeugen von Schall in einem ersten elektronischen Gerät, das zum Herstellen einer Verbindung mit einem zweiten elektronischen Gerät ausgelegt ist, wobei die Vorrichtung umfasst:
einen ersten Mischer (16, 301), der ausgelegt ist, Schall, der von einer Schallquelle (19) des ersten elektronischen Geräts übertragen wird, mit Stimmen zu mischen, die zwischen dem ersten elektronischen Gerät und dem zweiten elektronischen Gerät während der Kommunikation miteinander übertragen werden; und
eine Steuerung (3), die ausgelegt ist, die Erzeugung von Schall von der Schallquelle (19) zu steuern; wobei
die Steuerung (3) ausgelegt ist, die Schallerzeugung gemäß Steuerdaten zu steuern, die angeben, welcher Schall von der Schallquelle (19) ausgegeben wird und wie dieser Schall ausgegeben wird;
**dadurch gekennzeichnet, dass**
die Steuerung (3) ausgelegt ist, die Schallerzeugung gemäß Steuerdaten zu steuern, die von dem zweiten elektronischen Gerät während der Kommunikation mit dem ersten elektronischen Gerät erhalten werden.

2. Vorrichtung nach Anspruch 1, wobei die Steuerdaten wenigstens eine Information über Klangfarbe, Tonhöhe, Länge, Intensität und Geschwindigkeit umfassen.

3. Vorrichtung nach Anspruch 1 oder 2, wobei der Mischer (16, 301) ausgelegt ist, den Schall mit Stimmen zu mischen, die von dem zweiten elektronischen Gerät an das erste elektronische Gerät übertragen werden.

4. Vorrichtung nach Anspruch 3, ferner einen zweiten Mischer (200) umfassend, der ausgelegt ist, den Schall, der von der Schallquelle (19) übertragen wird, mit Stimmen zu mischen, die von dem ersten elektronischen Gerät an das zweite elektronische Gerät übertragen werden.

5. Vorrichtung nach Anspruch 1, wobei der Mischer (16, 301) ausgelegt ist, den Schall mit Stimmen zu mischen, die von dem ersten elektronischen Gerät an das zweite elektronische Gerät übertragen werden.

6. Vorrichtung nach einem der Ansprüche 1 bis 5, wobei die Vorrichtung eine leiterplattenartige Vorrichtung umfasst, die für einen Steckplatz eines elektrischen Geräts geeignet ist.

7. Vorrichtung nach Anspruch 1, wobei die Vorrichtung einen nichtflüchtigen Speicher (8) umfasst, der für einen Steckplatz eines elektronischen Geräts geeignet ist, und der erste Mischer (16, 301) von einem in dem nichtflüchtigen Speicher (8) gespeicherten Programm umfasst ist.

8. Vorrichtung nach Anspruch 3, wobei die Vorrichtung einen nichtflüchtigen Speicher (8) umfasst, der für einen Steckplatz eines elektronischen Geräts geeignet ist, und jeder der ersten und zweiten Mischer (16, 301; 200) von einem in dem nichtflüchtigen Speicher gespeicherten Programm umfasst ist.

9. Vorrichtung nach einem der Ansprüche 1 bis 6, die einen Übertragungsdatenprovider (5, 8, 3) umfasst, der ausgelegt ist, Steuerdaten auszugeben, die angeben, welcher Schall von der Schallquelle (19) ausgegeben wird und wie der Schall während der Kommunikation des ersten elektronischen Geräts und des zweiten elektronischen Geräts ausgegeben wird.

10. Vorrichtung nach Anspruch 9, wobei der Übertragungsdatenprovider ferner ausgelegt ist, die Steuerdaten, die angeben, welcher Schall von der Schallquelle des zweiten elektronischen Geräts ausgegeben wird und wie der Schall ausgegeben wird, als Daten auszugeben, die an das zweite elektronische Gerät übertragen werden sollen.

11. Programm, das einen Computer dazu veranlasst, ein Verfahren zur Erzeugung von Schall während einer Kommunikation eines ersten elektronischen Geräts und eines zweiten elektronischen Geräts auszuführen, wobei die Schritte, die durch den Computer gemäß dem Programm ausgeführt werden, umfassen:
Mischen von Schall, der von einer Schallquelle (19) des ersten elektronischen Geräts übertragen wird, mit Stimmen, die zwischen dem ersten elektronischen Gerät und dem zweiten elektronischen Gerät während der Kommunikation miteinander übertragen werden; und
Steuern der Schallerzeugung in Übereinstimmung mit Steuerdaten, die angeben, welcher Schall von der Schallquelle (19) ausgegeben wird und wie dieser Schall ausgegeben wird;
**gekennzeichnet durch**
Steuern der Schallerzeugung gemäß Steuerdaten, die von dem zweiten elektronischen Gerät während der Kommunikation mit dem ersten elektronischen Gerät erhalten werden.

12. Programm nach Anspruch 10, wobei die Steuerdaten wenigstens eine Information über Klangfarbe, Tonhöhe, Länge, Intensität und Geschwindigkeit umfassen.

13. Programm nach Anspruch 11, wobei der Mischschritt umfasst, den Schall mit Stimmen zu mischen, die von dem zweiten elektronischen Gerät an das erste elektronische Gerät übertragen werden.

14. Programm nach Anspruch 13, wobei die Schritte ferner umfassen, Schall, der von der Schallquelle (19) übertragen wird, mit Stimmen zu mischen, die von dem ersten elektronischen Gerät an das zweite elektronische Gerät übertragen werden.

15. Programm nach Anspruch 11, wobei der Mischschritt umfasst, den Schall mit Stimmen zu mischen, die von dem ersten elektronischen Gerät an das zweite elektronische Gerät übertragen werden.

16. Programm nach einem der Ansprüche 11 bis 15, wobei die Schritte ferner umfassen, die Steuerdaten auszugeben, die angeben, welcher Schall von der Schallquelle (19) des ersten elektronischen Geräts ausgegeben wird und wie der Schall während der Kommunikation zwischen dem ersten elektronischen Gerät und dem zweiten elektronischen Gerät ausgegeben wird.

17. Programm nach Anspruch 16, wobei die Schritte ferner umfassen, die Steuerdaten, die angeben, welcher Schall von der Schallquelle des zweiten elektronischen Geräts ausgegeben wird und wie der Schall ausgegeben wird, als Daten auszugeben, die an das zweite elektronische Gerät übertragen werden sollen.

18. Verfahren zur Erzeugung von Schall, der während der Kommunikation zwischen einem ersten elektronischen Gerät und einem zweiten elektronischen Gerät übertragen wird, umfassend:
Erzeugen von Schall in dem ersten elektronischen Gerät; und
Mischen des so erzeugten Schalls mit Stimmen eines Benutzers des ersten elektronischen Geräts, um dadurch Schall zu erzeugen, der von dem ersten elektronischen Gerät an das zweite elektronische Gerät übertragen werden soll, oder Stimmen eines Benutzers des zweiten elektronischen Geräts, die von dem zweiten elektronischen Gerät an das erste elektronischen Gerät übertragen werden; und
Erzeugen des Schalls gemäß Steuerdaten, die angeben, welcher Schall erzeugt werden soll und wie der Schall erzeugt werden soll;
**dadurch gekennzeichnet, dass**
der Schall gemäß Steuerdaten erzeugt wird, die während der Kommunikation mit den ersten elektronischen Gerät von dem zweiten elektronischen Gerät erhalten werden.

19. Verfahren nach Anspruch 18, wobei die Steuerdaten wenigstens eine Information über Klangfarbe, Tonhöhe, Länge, Intensität und Geschwindigkeit umfassen.

20. Verfahren nach Anspruch 18, wobei:
der Schall gemäß Steuerdaten erzeugt wird, die in dem ersten elektronischen Gerät gespeichert sind; und
der so erzeugte Schall mit Stimmen eines Benutzers des ersten elektronischen Geräts gemischt wird, um dadurch Schall zu erzeugen, der von dem ersten elektronischen Gerät an das zweite elektronische Gerät übertragen werden soll.

21. Verfahren nach Anspruch 18, wobei:
der Schall gemäß Steuerdaten erzeugt wird, die von dem zweiten elektronischen Gerät an das erste elektronische Gerät übertragen werden; und
der so erzeugte Schall mit Stimmen eines Benutzers des zweiten elektronischen Geräts gemischt wird, die von dem zweiten elektronischen Gerät an das erste elektronische Gerät übertragen werden.

22. Elektronisches Gerät umfassend:
ein Kommunikationsgerät zum Herstellen einer Verbindung mit einem anderen elektronischen Gerät;
eine Schallquelle; und
die Vorrichtung nach Anspruch 1.

## Revendications

1. Appareil de production de sons dans un premier dispositif électronique étant adapté pour établir une communication avec un second dispositif électronique, l'appareil comprenant:
un premier mélangeur (16, 301) étant adapté pour mélanger un son transmis depuis une source de sons (19) du premier dispositif électronique avec des voix transmises entre le premier dispositif électronique et le second dispositif électronique durant une communication l'un avec l'autre; et
un dispositif de commande (3) étant adapté pour commander une production de sons en provenance de la source de sons (19); et
le dispositif de commande (3) étant adapté pour commander la production de sons selon des données de commande indiquant quel son est émis de la source de sons (19) et comment ce son est émis;
**caractérisé en ce que**
le dispositif de commande (3) est adapté pour commander la production de sons selon des données de commande reçues du second dispositif électronique durant une communication avec le premier dispositif électronique.

2. Appareil selon la revendication 1, dans lequel les données de commande incluent au moins une information de timbre, de hauteur, de longueur, d'intensité et de vitesse.

3. Appareil selon la revendication 1 ou 2, dans lequel le mélangeur (16, 301) est adapté pour mélanger le son avec des voix transmises du second dispositif électronique au premier dispositif électronique.

4. Appareil selon la revendication 3, comprenant en outre un second mélangeur (200) étant adapté pour mélanger le son transmis depuis la source de sons (19) avec des voix transmises du premier dispositif électronique au second dispositif électronique.

5. Appareil selon la revendication 1, dans lequel le mélangeur (16, 301) est adapté pour mélanger le son avec des voix transmises du premier dispositif électronique au second dispositif électronique.

6. Appareil selon l'une quelconque des revendications 1 à 5, dans lequel l'appareil comprend un dispositif de type carte applicable à un logement d'un dispositif électrique.

7. Appareil selon la revendication 1, dans lequel l'appareil comprend une mémoire non volatile (8) applicable à un logement de dispositif électronique, et le premier mélangeur (16, 301) comporte un programme stocké dans la mémoire non volatile (8).

8. Appareil selon la revendication 3, dans lequel l'appareil comprend une mémoire non volatile (8) applicable à un logement d'un dispositif électronique, et chacun des premier et second mélangeurs (16, 301; 200) comporte un programme stocké dans la mémoire non volatile.

9. Appareil selon l'une quelconque des revendications 1 à 6, comprenant un fournisseur de données de transmission (5, 8, 3) étant adapté pour émettre des données de commande indiquant quel son est émis de la source de sons (19) et comment le son est émis durant une communication du premier dispositif électronique et du second dispositif électronique.

10. Appareil selon la revendication 9, dans lequel le fournisseur de données de transmission est en outre adapté pour émettre, en tant que données à transmettre au second dispositif électronique, les données de commande indiquant quel son est émis de la source de sons du second dispositif électronique et comment le son est émis.

11. Programme pour amener un ordinateur à effectuer une méthode de production de sons durant une communication d'un premier dispositif électronique et d'un second dispositif électronique, dans lequel des étapes exécutées par l'ordinateur selon le programme incluent:
le mélange d'un son transmis depuis une source de sons (19) du premier dispositif électronique avec des voix transmises entre le premier dispositif électronique et le second dispositif électronique durant une communication l'un avec l'autre, et
la commande de la production de sons selon des données de commande indiquant quel son est émis de la source de sons (19) et comment ce son est émis;
**caractérisé par**
la commande de la production de sons selon des données de commande reçues du second dispositif électronique durant une communication avec le premier dispositif électronique.

12. Programme selon la revendication 10, dans lequel les données de commande incluent au moins une information de timbre, de hauteur, de longueur, d'intensité et de vitesse.

13. Programme selon la revendication 11, dans lequel l'étape de mélange inclut le mélange du son avec des voix transmises du second dispositif électronique au premier dispositif électronique.

14. Programme selon la revendication 13, dans lequel les étapes incluent en outre le mélange d'un son transmis depuis la source de sons (19) avec des voix transmises du premier dispositif électronique au second dispositif électronique.

15. Programme selon la revendication 11, dans lequel l'étape de mélange inclut le mélange du son avec des voix transmises du premier dispositif électronique au second dispositif électronique.

16. Programme selon l'une quelconque des revendications 11 à 15, dans lequel les étapes incluent en outre l'émission des données de commande indiquant quel son est émis de la source de sons (19) du premier dispositif électronique et comment le son est émis durant une communication entre le premier dispositif électronique et le second dispositif électronique.

17. Programme selon la revendication 16, dans lequel les étapes incluent en outre l'émission, en tant que données à transmettre au second dispositif électronique, de données de commande indiquant quel son est émis de la source de sons du second dispositif électronique et comment le son est émis.

18. Méthode de production de sons transmis durant une communication entre un premier dispositif électronique et un second dispositif électronique, comprenant:
la production de sons dans le premier dispositif électronique; et
le mélange du son ainsi produit soit avec des voix d'un utilisateur du premier dispositif électronique pour produire de cette façon un son à transmettre au second dispositif électronique à partir du premier dispositif électronique, soit avec des voix d'un utilisateur du second dispositif électronique transmises du second dispositif électronique au premier dispositif électronique; et
la production du son selon des données de commande indiquant quel son doit être produit et comment le son doit être produit;
**caractérisée en ce que**
le son est produit selon des données de commande reçues du second dispositif électronique durant une communication avec le premier dispositif électronique.

19. Méthode selon la revendication 18, dans laquelle les données de commande incluent au moins une information de timbre, de hauteur, de longueur, d'intensité et de vitesse.

20. Méthode selon la revendication 18, dans laquelle:
le son est produit selon des données de commande stockées dans le premier dispositif électronique; et
le son ainsi produit est mélangé avec des voix d'un utilisateur du premier dispositif électronique pour produire de cette façon un son à transmettre au second dispositif électronique à partir du premier dispositif électronique.

21. Méthode selon la revendication 18, dans laquelle:
le son est produit selon des données de commande transmises du second dispositif électronique au premier dispositif électronique; et
le son ainsi produit est mélangé avec des voix d'un utilisateur du second dispositif électronique transmises du second dispositif électronique au premier dispositif électronique.

22. Dispositif électronique comprenant:
un dispositif de communication pour établir une communication avec un autre dispositif électronique; une source de sons; et
l'appareil selon la revendication 1.
